# EUROPÄISCHE PATENTSCHRIFT

(11) **EP 2 509 819 B1**
(45) Veröffentlichungstag und Bekanntmachung des Hinweises auf die Patenterteilung: **28.08.2019**
(21) Anmeldenummer: 10776948.1
(22) Anmeldetag: 03.11.2010
(51) Int. Cl.: H02J 7/00, B60L 53/12

(54) **ANORDNUNG ZUM INDUKTIVEN BELADEN EINES ENERGIESPEICHERS FAHRZEUGS UND LADESTATION**
SYSTEM FOR INDUCTIVELY CHARGING A VEHICLE HAVING AN ENERGY ACCUMULATOR, AND CHARGING STATION
SYSTÈME POUR LA CHARGE INDUCTIVE D'UN VÉHICULE À ACCUMULATEUR D'ÉNERGIE ET BORNE DE CHARGE

(30) Priorität: 09.12.2009 DE 102009057437
(43) Veröffentlichungstag der Anmeldung: 17.10.2012
(73) Patentinhaber: SEW-EURODRIVE GmbH & Co. KG, 76646 Bruchsal (DE)
(72) Erfinder: BECKER, Günter, 76684 Östringen (DE); DEGEN, Dirk, 76646 Bruchsal (DE)
(74) Vertreter: Tüngler, Eberhard
(86) Internationale Anmeldenummer: PCT/EP2010/006688
(87) Internationale Veröffentlichungsnummer: WO 2011/069583

(56) Entgegenhaltungen:
- WO-A1-2009/133416
- DE-U1-202007 004 293
- US-A- 5 573 090
- US-A1- 2008 265 684

## Beschreibung

Die Erfindung betrifft eine Anordnung zum induktiven Beladen eines Energiespeichers Fahrzeugs und eine Ladestation.

Es ist bekannt, Fahrzeuge mit einem Elektromotor auszustatten, der aus einem mitgeführten Energiespeicher versorgbar ist. Dieser muss beispielsweise beim Parken des Fahrzeuges über eine galvanische Verbindung aufgeladen werden.

Der Erfindung liegt daher die Aufgabe zugrunde, eine Anordnung zum induktiven Beladen eines Energiespeichers Fahrzeugs und eine Ladestation weiterzubilden, wobei die Anordnung in verschiedenen Klimazonen sicher verwendbar sein soll.

Erfindungsgemäß wird die Aufgabe bei der Anordnung zum induktiven Beladen eines Energiespeichers Fahrzeugs nach den in Anspruch 1 und bei der Ladestation nach den in Anspruch 15 angegebenen Merkmalen gelöst.

Einige Merkmale der Anordnung zum induktiven Beladen eines Energiespeichers Fahrzeugs sind, dass eine elektronische Schaltung im Inneren einer Haube vorgesehen ist, deren Öffnung an der Unterseite der Haube angeordnet ist. Eine solche Haube mit elektronischer Schaltung ist in DE 20 2007 004 293 U1 zu sehen.

Von Vorteil ist dabei, dass ein Schutz vor Wasser oder anderen am Boden auftretenden Flüssigkeiten ausgebildet ist. Dabei ist insbesondere ein Schutz gegen Hochwasser oder in die Bodeneinfassung eindringendes Wasser gegeben, da die Haube derart weit die elektronische Schaltung nach unten, also in Gravitationsrichtung, überragt, dass selbst bei voll gefüllter Bodeneinfassung der Wasserdruck nicht groß genug ist, um die Flüssigkeitsoberfläche innerhalb der Haube derart weit aufsteigen zu lassen, dass die elektronische Schaltung mit der Flüssigkeit in Kontakt kommt.

Der Schutz ist im Übrigen mittels der Haube in passiver Weise erreichbar. Besonders wichtig ist dabei, dass er nur das Vorhandensein einer luftdichten und vorzugsweise flüssigkeitsdichten beziehungsweise wasserdichten Haube voraussetzt.

Darüber hinaus ist das Aufladen ohne galvanische Verbindung ausführbar und somit die Sicherheit erhöht. Denn mittels der berührungslosen Ausführung ist es auch verhindert, dass eine elektrische Steckverbindung zwischen Fahrzeug und stationärer Schaltung unter Wasser zu liegen kommt. Die im Boden stationär angeordnete Schaltung ist sicher ausführbar, insbesondere auch mit Fehlerstromüberwachung und entsprechender Abschaltung.

Bei einer vorteilhaften Ausgestaltung ist die elektronische Schaltung an der Innenwandung der Oberseite der Haube angeordnet. Von Vorteil ist dabei, dass somit der bestmögliche Schutz gegen in der Haube aufsteigendes Wasser erreichbar ist.

Bei einer vorteilhaften Ausgestaltung wird die elektronische Schaltung aus einer Versorgungsleitung mit elektrischer Energie versorgt, insbesondere wobei die Versorgungsleitung durchgeschleift vorgesehen ist, also die elektronische Schaltung aus einem T-Knoten versorgt ist. Von Vorteil ist dabei, dass dabei wasserdichte Kabel verwendbar sind und infolge des Durchschleifens mehrere Anordnungen parallel versorgbar sind, also aus einer Spannungsquelle versorgbar sind. Es ist also das Öffentliche Netz als Versorgungsquelle verwendbar. Alternativ ist auch eine parallele Versorgung aller elektronischer Schaltungen der Anordnungen einer Ladestation ausführbar, wobei dann vorzugsweise eine Stromquelle zur Versorgung vorteilhaft ist. In diesem Fall wäre dann ein T-Knoten verzichtbar.

Bei der Ausgestaltung ist die Haube an der Unterseite eines Deckels, insbesondere einer Deckelplatte, angeordnet. Von Vorteil ist dabei, dass die Haube mitsamt elektronischer Schaltung durch Abheben des Deckels von der restlichen Bodeneinfassung, insbesondere dem Gehäuseteil der Anordnung, zugänglich und somit wartbar, reparierbar oder austauschbar wird.

Bei der Ausgestaltung weist der Deckel eine Ferritplatte und eine auf dieser vorgesehene Primärwicklung auf. Von Vorteil ist dabei, dass die induktive Kopplung zur Sekundärspule des Verbrauchers verbessert wird, da der magnetische Streufluss vermindert wird.

Bei einer vorteilhaften Ausgestaltung prägt die elektronische Schaltung einen Wechselstrom in die Primärwicklung ein, insbesondere einen Wechselstrom mit einer Frequenz zwischen 10 und 500 kHz, insbesondere zwischen 20 und 30 kHz. Von Vorteil ist dabei, dass hohe Leistungen übertragbar sind, insbesondere mehrere Kilowatt, auf kleinem Volumen, insbesondere vom Boden an ein gewöhnliches Automobil, wobei die Sekundärspule am Boden des Fahrzeugs angeordnet ist innerhalb der von den Rädern begrenzten Bodenfläche des Fahrzeugs. Somit ist auf kompaktem Raumbereich eine hohe Leistung mit einfachen Mitteln berührungslos übertragbar. Zu Erzeugung des Wechselstroms sind außerdem nur gewöhnliche Leistungshalbleiter notwendig, die als Massenprodukt erhältlich sind.

Bei einer vorteilhaften Ausgestaltung weist das Fahrzeug eine Sekundärwicklung auf, der eine derartige Kapazität in Reihe oder parallel derart zugeschaltet ist, dass die zugehörige Resonanzfrequenz im Wesentlichen der Frequenz des in die Primärwicklung 2 eingeprägten Wechselstromes entspricht. Von Vorteil ist dabei, dass auch bei Abweichung der Sekundärspule von ihrer optimalen Position relativ zur Primärwicklung oder sonstiger schwacher Kopplung ein hoher Wirkungsgrad bei der Übertragung erzielbar ist.

Bei einer vorteilhaften Ausgestaltung ist der Deckel von einem Fahrzeug überfahrbar ausgeführt. Von Vorteil ist dabei, dass somit die Anordnung in Straßen oder Parkplätzen vorsehbar ist.

Bei einer vorteilhaften Ausgestaltung ist der Deckel auf einem Gehäuseteil aufsetzbar und verbindbar, das zumindest eine seitliche Ausnehmung zur Durchführung eines Versorgungskabels aufweist. Von Vorteil ist dabei, dass das Kabel geschützt im Boden führbar ist, nämlich innerhalb des schützenden Rohrs.

Bei einer vorteilhaften Ausgestaltung ist das Versorgungskabel außerhalb des Gehäuseteils in einem Rohr geführt, das durch die Ausnehmung des Gehäuseteils führt. Von Vorteil ist dabei, dass das Kabel in den geschützten Innenraum des Gehäuseteils geführt wird.

Bei einer vorteilhaften Ausgestaltung ist die Haube dicht, insbesondere luftdicht, ausgeführt. Von Vorteil ist dabei, dass Luft nicht entweichen kann und somit der Luftdruck sich auch nicht abbauen kann.

Bei einer vorteilhaften Ausgestaltung weist der Deckel ein Tragteil, insbesondere Platte aus Aluminium oder Stahl, auf, an dessen Unterseite die Haube befestigt ist und auf dessen Oberseite die Ferritplatte angeordnet ist, auf deren Oberseite die Primärwicklung angeordnet ist. Von Vorteil ist dabei, dass die Stabilität verbesserbar ist und die Ferritplatte eine stabile Grundlage aufweist.

Bei einer vorteilhaften Ausgestaltung ist der Deckel mittels eines Drehgelenks am Gehäuseteil angeordnet. Von Vorteil ist dabei, dass durch einfaches Aufklappen die elektronische Schaltung zugänglich machbar ist.

Wichtige Merkmale bei der Ladestation mit mehreren Anordnungen sind, dass die Anordnungen parallel versorgt sind über die Versorgungsleitung aus einem Öffentlichen Versorgungsnetz versorgt sind. Von Vorteil ist dabei, dass eine Spannungsquelle verwendbar ist, insbesondere eine niederfrequente Drehspannungsquelle.

Bei einer vorteilhaften Ausgestaltung weist sind nächst benachbarte Gehäuseteile mittels jeweiligem Rohr verbunden zur Durchführung des Versorgungskabels, insbesondere wobei das jeweilige Rohr an seinem ersten axialen Endbereich durch eine Ausnehmung in einem ersten Gehäuseteil und an seinem zweiten axialen Endbereich durch eine Ausnehmung in einem zweiten Gehäuseteil geführt ist. Von Vorteil ist dabei, dass eine bodenverlegte geschützte Verbindung ausbildbar ist.

Bei der Ausgestaltung weist der Deckel ein Tragteil, eine Platte aus Kunststoff auf, an dessen Unterseite die Ferritplatte angeordnet ist, auf deren Oberseite die Primärwicklung angeordnet ist, so dass die Primärwicklung zwischen der Platte aus Kunststoff und der Ferritplatte angeordnet ist,
wobei die Primärwicklung von Vergussmasse, insbesondere von ausgehärteter Vergussmasse, umgeben ist,
wobei die Seitenwandung, insbesondere die Haube, verbunden ist mit dem Tragteil, der Vergussmasse und/oder der Ferritplatte,
insbesondere wobei die Ferritplatte mehrstückig ausgeführt ist. Von Vorteil ist dabei, dass das Tragteil aus Kunststoff ist und somit induktive Kopplung zwischen Primärwicklung und Sekundärwicklung nicht oder zumindest fast nicht verschlechtert wird. Außerdem ist die Kunststoffplatte durch die an der Unterseite der Kunststoffplatt ausgehärtete Vergussmasse stabilisiert und somit vom Fahrzeug überfahrbar ausgestaltbar. Die Vergussmasse erfüllt des Weiteren auch die Haltefunktion für die Ferritplatte und den Primärleiter. Außerdem ist die Haube von unten am Deckel befestigt, also an der von der Primärwicklung abgewandten Seite der Ferritplatte. Es ist sogar ein zumindest zusätzliches stoffschlüssiges Verbinden der Haube mit der Vergussmasse herstellbar und somit Luftdichtheit an dieser Verbindung bewirkbar. Zusätzlich kann eine Schraubverbindung zwischen Haubenteil und Deckel vorgesehen werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

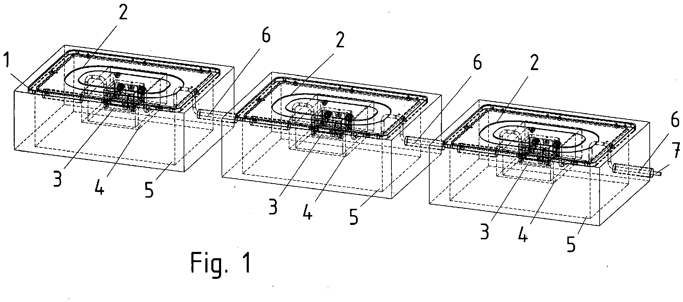

In der Figur 1 ist das Prinzip der Erfindung schematisch skizziert, wobei drei Bodeneinfassungen in Reihe vorgesehen sind.

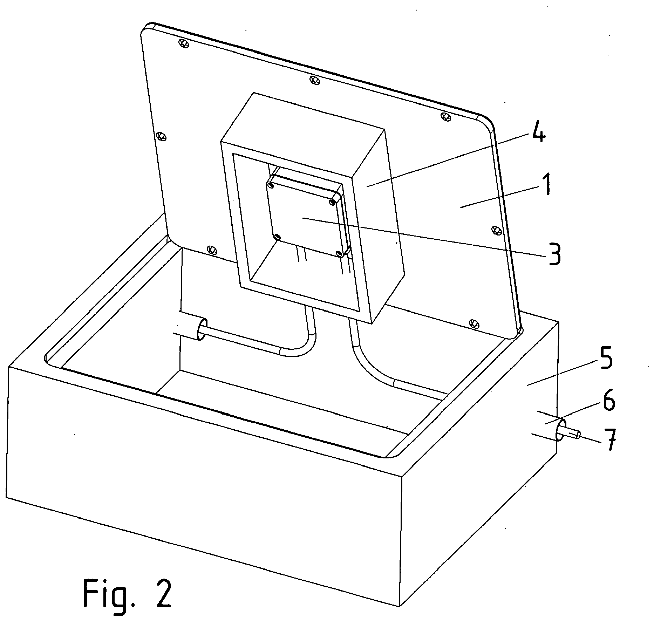

In Figur 2 ist eine Bodeneinfassung mit aufgeklapptem Deckel 1 in Schrägansicht gezeigt.

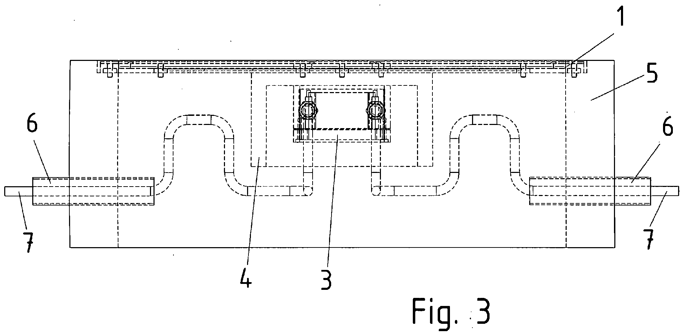

In der Figur 3 ist eine seitliche Durchsicht der Bodeneinfassung gezeigt.

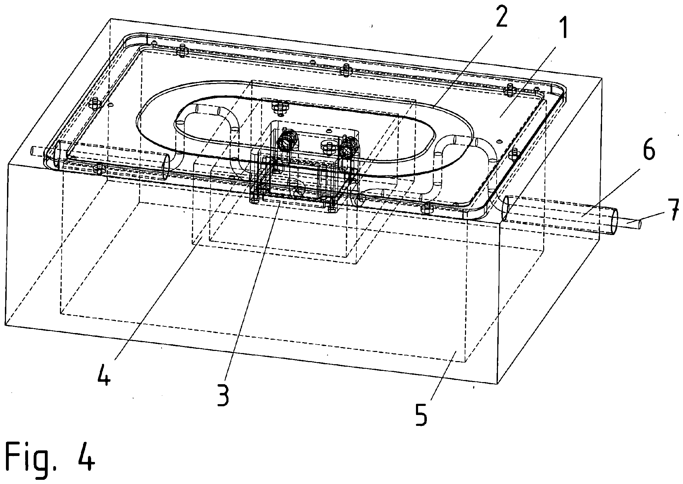

In der Figur 4 ist eine räumliche Durchsicht der Bodeneinfassung gezeigt.

Dabei weist die der Bodeneinfassung ein Gehäuseteil 5 auf, das mit einem Deckel 1 verschließbar ist.

Das Gehäuseteil 5 ist hierbei aus vier Seitenwänden gebildet und weist kein Oberteil und kein Unterteil auf. Somit ist der Abfluss von eingedrungener Flüssigkeit nach unten ermöglicht, also ein Versickern der eingedrungenen Flüssigkeit.

Die Bodeneinfassung wird in Reihe angeordnet, beispielsweise auf Parkplätzen. Dabei wird sie derart tief im Boden angeordnet, dass sie von einem Fahrzeug, wie beispielsweise Automobil, überfahrbar ist. Außerdem die Bodeneinfassung auch mit der entsprechenden Festigkeit ausgebildet, damit ein Überfahren ermöglicht ist. Insbesondere ist sie in der Mitte eines Parkplatzes anordenbar, so dass die Räder des Fahrzeugs seitlich beabstandet positionierbar sind und der Deckel 1 somit direkt unter dem Fahrzeugboden zu liegen kommt.

Der Deckel 1 umfasst eine als Ringwicklung ausgeführte Primärwicklung 2, die auf einer Ferritplatte aufgelegt ist. Vorzugsweise ist die Wicklung vergossen und/oder unterhalb einer Kunststoffplatte angeordnet. Somit ist die Primärwicklung 2 geschützt vorgesehen. Die Ferritplatte ist auf der dem Fahrzeug abgewandten Seite der Primärwicklung 2 angeordnet.

Der Deckel 1 ist schraubverbunden mit dem Gehäuseteil 5. Alternativ ist der mittels eines am Gehäuseteil 5 vorgesehenen Drehgelenks aufklappbar.

An der Unterseite des Deckels 1 ist eine elektronische Schaltung 3 in einer Haube 4 angeordnet, so dass bei ins Gehäuseteil eingedrungener Flüssigkeit diese nicht aufsteigen kann zur elektronischen Schaltung 3, da die Haube 4 mit dem Deckel 1 luftdicht verbunden ist und somit die aufsteigende Flüssigkeit durch Luft verdrängt wird. Nur wenn der Druck in der Flüssigkeit auf sehr hohe Werte steigt, kann der Flüssigkeitspegel derart hoch steigen, dass die elektronische Schaltung mit der Flüssigkeit in Kontakt kommt. Auf dem Parkplatz auftretendes Regenwasser erreicht diese hohen Druckwerte nicht - auch wenn es in die Bodeneinfassung einfließende und im Untergrund, also an der Unterseite der Bodeneinfassung, nicht versickern würde und somit die Bodeneinfassung nach und nach gänzlich befüllen würde.

Die Seitenwand der Haube 4 ist in Gravitationsrichtung mindestens doppelt so lang wie die Länge der elektronischen Schaltung 3 in dieser Richtung. Somit ist ein Druck in der Flüssigkeit von mindestens etwa 1 bar notwendig, um die Luft in der Haube 4 derart stark zu komprimieren, dass der Flüssigkeitsstand die elektronische Schaltung 3 benetzen könnte. Durch entsprechende Verlängerung der Haubenlänge in Gravitationsrichtung ist eine Erhöhung des kritischen Drucks erreichbar.

Ein Versorgungskabel 7 wird durch ein bodenverlegtes schützendes Rohr 6 durch eine Ausnehmung des Gehäuseteils 5 geführt und versorgt die elektronische Schaltung 3 mit elektrischer Energie. Vorzugsweise führt das Versorgungskabel Drehstromleitungen. Alternativ führt das Versorgungskabel 7 nur eine einphasige Wechselstromleitung.

Die elektronische Schaltung 3 weist einen Gleichrichter aus, dessen gleichgerichtete Spannung einen Wechselrichter speist, welcher eine einphasige Wechselspannung erzeugt, die eine Frequenz zwischen 10 und 500 kHz, vorzugsweise eine Frequenz zwischen 20 und 30 kHz, aufweist. Aus dieser Wechselspannung wird ein Gyratör gespeist, dessen Resonanzfrequenz im Wesentlichen der Frequenz entspricht und der somit ausgangsseitig eine Stromquelle darstellt.

Mittels der so gebildeten Wechselstromquelle wird in die Primärwicklung 2 ein Wechselstrom eingeprägt.

Das Fahrzeug weist eine Sekundärwicklung auf, der eine derartige Kapazität in Reihe oder parallel derart zugeschaltet ist, dass die zugehörige Resonanzfrequenz im Wesentlichen der Frequenz des in die Primärwicklung 2 eingeprägten Wechselstromes entspricht. Somit ist auch bei nicht optimaler Positionierung des Fahrzeuges, also einer verschlechterten induktiven Kopplung zwischen Primärwicklung 2 und Sekundärwicklung ein ausreichender Wirkungsgrad erreichbar bei der berührungslosen induktiven Energieübertragung ans Fahrzeug.

Im Fahrzeug wird die übertragene elektrische Energie zum Laden eines Energiespeichers verwendet.

Die Versorgungsleitung 7 ist durchgeschleift vorgesehen. Somit sind die elektronischen Schaltungen 3 der in Reihe hintereinander angeordneten Bodeneinfassungen parallel versorgbar. Hierzu ist also innerhalb jeder Haube 4 ein T-Knoten ausgeführt.

Bei einem alternativen Ausführungsbeispiel wird statt dieser Parallelversorgung eine Reihenversorgung ausgeführt.

Bei der Herstellung des Parkplatzes werden Vertiefungen in den Boden eingebracht, in welche jeweils ein Gehäuseteil 5 eingesetzt wird. Außerdem werden die Rohre zwischen den Gehäuseteilen 5 eingesetzt, wodurch die Versorgungsleitungen 7 geschützt führbar sind. Nach Ausführen der Verkabelung und Aufsetzen der mit Haube 4 und elektronischer Schaltung 3 versehenen vorgefertigten Deckel 1 auf das jeweilige Gehäuseteil 5 wird der Untergrund aufgefüllt und die befahrbare Bodenoberfläche gefertigt.

### Bezugszeichenliste

1 Deckel
2 Primärwicklung
3 elektronische Schaltung
4 Haube
5 Gehäuseteil
6 Rohr
7 Versorgungsleitung

## Patentansprüche

1. Anordnung zum induktiven Beladen eines Energiespeichers Fahrzeugs,
wobei in der Anordnung eine elektronische Schaltung (3) im Inneren einer Haube (4) vorgesehen ist, deren Öffnung an der Unterseite der Haube (4) angeordnet ist,
wobei die Haube (4) an der Unterseite eines Deckels (1), insbesondere einer Deckelplatte, angeordnet ist, **gekennzeichnet dadurch dass** der Deckel (1) eine Ferritplatte und eine auf dieser vorgesehene Primärwicklung (2) aufweist, wobei der Deckel (1) ein Tragteil, welches als Platte aus Kunststoff ausgeführt ist, aufweist,
wobei an der Unterseite des Tragteils die Ferritplatte angeordnet ist, auf deren Oberseite die Primärwicklung (2) angeordnet ist, so dass die Primärwicklung (2) zwischen der Platte aus Kunststoff und der Ferritplatte angeordnet ist,
wobei die Primärwicklung (2) von Vergussmasse umgeben ist,
wobei die Seitenwand der Haube (4) verbunden ist mit dem Tragteil, der Vergussmasse und/oder der Ferritplatte.

2. Anordnung nach mindestens einem der vorangegangenen Ansprüche,
**dadurch gekennzeichnet, dass**
die elektronische Schaltung (3) an der Innenwandung der Oberseite der Haube (4) angeordnet ist.

3. Anordnung nach mindestens einem der vorangegangenen Ansprüche,
**dadurch gekennzeichnet, dass**
die elektronische Schaltung (3) aus einer Versorgungsleitung (7) mit elektrischer Energie versorgt wird, insbesondere wobei die Versorgungsleitung (7) durchgeschleift vorgesehen ist, also die elektronische Schaltung (3) aus einem T-Knoten versorgt ist.

4. Anordnung nach mindestens einem der vorangegangenen Ansprüche,
**dadurch gekennzeichnet, dass**
der Deckel (1) eine Deckelplatte ist.

5. Anordnung nach mindestens einem der vorangegangenen Ansprüche,
**dadurch gekennzeichnet, dass**
zwischen Primärwicklung (2) und Ferritplatte Vergussmasse vorgesehen ist.

6. Anordnung nach mindestens einem der vorangegangenen Ansprüche,
**dadurch gekennzeichnet, dass**
die elektronische Schaltung (3) einen Wechselstrom in die Primärwicklung (2) einprägt, insbesondere einen Wechselstrom mit einer Frequenz zwischen 10 und 500 kHz, insbesondere zwischen 20 und 30 kHz..

7. Anordnung nach mindestens einem der vorangegangenen Ansprüche,
**dadurch gekennzeichnet, dass**
das Fahrzeug eine Sekundärwicklung aufweist, der eine derartige Kapazität in Reihe oder parallel derart zugeschaltet ist, dass die zugehörige Resonanzfrequenz im Wesentlichen der Frequenz des in die Primärwicklung (2) eingeprägten Wechselstromes entspricht.

8. Anordnung nach mindestens einem der vorangegangenen Ansprüche,
**dadurch gekennzeichnet, dass**
der Deckel (1) von einem Fahrzeug überfahrbar ausgeführt ist.

9. Anordnung nach mindestens einem der vorangegangenen Ansprüche,
**dadurch gekennzeichnet, dass**
der Deckel (1) auf einem Gehäuseteil (5) aufsetzbar und verbindbar ist, das zumindest eine seitliche Ausnehmung zur Durchführung eines Versorgungskabels aufweist.

10. Anordnung nach mindestens einem der vorangegangenen Ansprüche,
**dadurch gekennzeichnet, dass**
das Versorgungskabel außerhalb des Gehäuseteils (5) in einem Rohr (6) geführt ist, das durch die Ausnehmung des Gehäuseteils (5) führt.

11. Anordnung nach mindestens einem der vorangegangenen Ansprüche,
**dadurch gekennzeichnet, dass**
die Haube (4) dicht, insbesondere luftdicht, ausgeführt ist.

12. Anordnung nach mindestens einem der vorangegangenen Ansprüche,
**dadurch gekennzeichnet, dass**
die Primärwicklung (2) von ausgehärteter Vergussmasse umgeben ist,
wobei die Ferritplatte mehrstückig ausgeführt ist.

13. Anordnung nach mindestens einem der vorangegangenen Ansprüche,
**dadurch gekennzeichnet, dass**
der Deckel (1) ein Tragteil, insbesondere Platte aus Kunststoff, Aluminium oder Stahl, aufweist, an dessen Unterseite die Haube (4) befestigt ist und auf dessen Oberseite die Ferritplatte angeordnet ist, auf deren Oberseite die Primärwicklung (2) angeordnet ist.

14. Anordnung nach mindestens einem der vorangegangenen Ansprüche,
**dadurch gekennzeichnet, dass**
der Deckel (1) mittels eines Drehgelenks am Gehäuseteil (5) angeordnet ist.

15. Ladestation mit mehreren Anordnungen nach mindestens einem der vorangegangenen Ansprüche,
**dadurch gekennzeichnet, dass**
die Anordnungen parallel versorgt sind über die Versorgungsleitung (7) aus einem Öffentlichen Versorgungsnetz.

16. Ladestation nach mindestens einem der vorangegangenen Ansprüche,
**dadurch gekennzeichnet, dass**
nächst benachbarte Gehäuseteile (5) mittels jeweiligem Rohr (6) verbunden sind zur Durchführung des Versorgungskabels, insbesondere wobei das jeweilige Rohr (6) an seinem ersten axialen Endbereich durch eine Ausnehmung in einem ersten Gehäuseteil (5) und an seinem zweiten axialen Endbereich durch eine Ausnehmung in einem zweiten Gehäuseteil (5) geführt ist.

## Claims

1. An arrangement for inductively charging an energy store vehicle,
wherein in the arrangement
an electronic circuit (3) is provided in the interior of a hood (4), the opening of which is arranged on the underside of the hood (4),
wherein the hood (4) is arranged on the underside of a cover (1), in particular a cover plate,
**characterised in that**
the cover (1) has a ferrite plate and a primary winding (2) provided thereon,
the cover (1) having a supporting part which is embodied as a plate made of plastics material,
the ferrite plate being arranged on the underside of the supporting plate, on the upper side of which ferrite plate the primary winding (2) is arranged, so that the primary winding (2) is arranged between the plate made of plastics material and the ferrite plate,
the primary winding (2) being surrounded by potting compound,
the side wall of the hood (4) being connected to the supporting part, the potting compound and/or the ferrite plate.

2. An arrangement according to at least one of the preceding claims,
**characterised in that**
the electronic circuit (3) is arranged on the inner wall of the upper side of the hood (4).

3. An arrangement according to at least one of the preceding claims,
**characterised in that**
the electronic circuit (3) is supplied with electrical energy from a supply line (7), in particular with the supply line (7) being provided looped through, i.e. the electronic circuit (3) is supplied from a T-node.

4. An arrangement according to at least one of the preceding claims,
**characterised in that**
the cover (1) is a cover plate.

5. An arrangement according to at least one of the preceding claims,
**characterised in that**
potting compound is provided between the primary winding (2) and ferrite plate.

6. An arrangement according to at least one of the preceding claims,
**characterised in that**
the electronic circuit (3) injects an alternating current into the primary winding (2), in particular an alternating current with a frequency of between 10 and 500 kHz, in particular between 20 and 30 kHz.

7. An arrangement according to at least one of the preceding claims,
**characterised in that**
the vehicle has a secondary winding with which such a capacitor is connected in series or parallel such that the associated resonant frequency corresponds substantially to the frequency of the alternating current injected into the primary winding (2).

8. An arrangement according to at least one of the preceding claims,
**characterised in that**
the cover (1) is designed so that it can be driven over by a vehicle.

9. An arrangement according to at least one of the preceding claims,
**characterised in that**
the cover (1) can be placed and connected on a housing part (5) which has at least one lateral cutout for feeding through a supply cable.

10. An arrangement according to at least one of the preceding claims,
**characterised in that**
the supply cable is conducted outside the housing part (5) in a tube (6) which passes through the cutout in the housing part (5).

11. An arrangement according to at least one of the preceding claims,
**characterised in that**
the hood (4) is designed so as to be tight, in particular airtight.

12. An arrangement according to at least one of the preceding claims,
**characterised in that**
the primary winding (2) is surrounded by cured potting compound,
the ferrite plate being of a multi-piece design.

13. An arrangement according to at least one of the preceding claims,
**characterised in that**
the cover (1) has a supporting part, in particular plate made of plastics material, aluminium or steel, on the underside of which the hood (4) is fastened and on the upper side of which the ferrite plate is arranged, on the upper side of which the primary winding (2) is arranged.

14. An arrangement according to at least one of the preceding claims,
**characterised in that**
the cover (1) is arranged on the housing part (5) by means of a rotary joint.

15. A charging station with a plurality of arrangements according to at least one of the preceding claims,
**characterised in that**
the arrangements are supplied in parallel via the supply line (7) from a public supply network.

16. A charging station according to at least one of the preceding claims,
**characterised in that**
next-adjacent housing parts (5) are connected by means of respective tube (6) for feeding through the supply cable, in particular with the respective tube (6) being guided at its first axial end region through a cutout in a first housing part (5) and at its second axial end region through a cutout in a second housing part (5).

## Revendications

1. Agencement de charge par induction d'un véhicule à accumulateur d'énergie,
dans lequel agencement un circuit électronique (3) est prévu à l'intérieur d'un capot (4) dont l'ouverture est disposée sur la face inférieure du capot (4),
dans lequel le capot (4) est disposé sur la face inférieure d'un couvercle (1), en particulier d'une plaque-couvercle,
**caractérisé en ce que** le couvercle (1) présente une plaque de ferrite et un enroulement primaire (2) prévu sur celle-ci,
dans lequel le couvercle (1) présente une partie de support qui est réalisée sous la forme d'une plaque en matière plastique,
dans lequel la plaque de ferrite est disposée sur la face inférieure de la partie de support, l'enroulement primaire (2) est disposé sur la face supérieure de la plaque de ferrite, de sorte que l'enroulement primaire (2) est disposé entre la plaque en matière plastique et la plaque de ferrite,
dans lequel l'enroulement primaire (2) est entouré d'une masse de scellement,
dans lequel la paroi latérale du capot (4) est reliée à la partie de support, à la masse de scellement et/ou à la plaque de ferrite.

2. Agencement selon au moins l'une des revendications précédentes,
**caractérisé en ce que** le circuit électronique (3) est disposé sur la paroi intérieure de la face supérieure du capot (4).

3. Agencement selon au moins l'une des revendications précédentes,
**caractérisé en ce que** le circuit électronique (3) est alimenté en énergie électrique par une ligne d'alimentation (7), en particulier la ligne d'alimentation (7) étant prévue bouclée, c'est-à-dire que le circuit électronique (3) est alimenté à partir d'un noeud en T.

4. Agencement selon au moins l'une des revendications précédentes,
**caractérisé en ce que** le couvercle (1) est une plaque-couvercle.

5. Agencement selon au moins l'une des revendications précédentes,
**caractérisé en ce qu'**une masse de scellement est prévue entre l'enroulement primaire (2) et la plaque de ferrite.

6. Agencement selon au moins l'une des revendications précédentes,
**caractérisé en ce que** le circuit électronique (3) injecte un courant alternatif dans l'enroulement primaire (2), en particulier un courant alternatif à une fréquence comprise entre 10 et 500 kHz, en particulier entre 20 et 30 kHz.

7. Agencement selon au moins l'une des revendications précédentes,
**caractérisé en ce que** le véhicule présente un enroulement secondaire auquel est connecté en série ou en parallèle un condensateur d'un type tel que la fréquence de résonance associée corresponde sensiblement à la fréquence du courant alternatif injecté dans l'enroulement primaire (2).

8. Agencement selon au moins l'une des revendications précédentes,
**caractérisé en ce que** le couvercle (1) est réalisé de manière à ce qu'un véhicule puisse rouler dessus.

9. Agencement selon au moins l'une des revendications précédentes,
**caractérisé en ce que** le couvercle (1) peut être placé et relié sur une partie de boîtier (5) qui présente au moins un évidement latéral pour le passage d'un câble d'alimentation.

10. Agencement selon au moins l'une des revendications précédentes,
**caractérisé en ce que** le câble d'alimentation est guidé à l'extérieur de la partie de boîtier (5) dans un tube (6) qui conduit à travers l'évidement de la partie de boîtier (5).

11. Agencement selon au moins l'une des revendications précédentes,
**caractérisé en ce que** le capot (4) est réalisé étanche, en particulier étanche à l'air.

12. Agencement selon au moins l'une des revendications précédentes,
**caractérisé en ce que** l'enroulement primaire (2) est entouré d'une masse de scellement durcie,
la plaque de ferrite étant réalisée en plusieurs pièces.

13. Agencement selon au moins l'une des revendications précédentes,
**caractérisé en ce que** le couvercle (1) présente une partie de support, en particulier une plaque en matière plastique, en aluminium ou en acier, sur la face inférieure de laquelle est fixé le capot (4) et sur la face supérieure de laquelle est disposée la plaque de ferrite sur la face supérieure de laquelle est disposé l'enroulement primaire (2).

14. Agencement selon au moins l'une des revendications précédentes,
**caractérisé en ce que** le couvercle (1) est disposé sur la partie de boîtier (5) au moyen d'une articulation tournante.

15. Station de charge comportant plusieurs agencements selon au moins l'une des revendications précédentes,
**caractérisée en ce que** les agencements sont alimentés en parallèle par la ligne d'alimentation (7) à partir d'un réseau d'alimentation public.

16. Station de charge selon au moins l'une des revendications précédentes,
**caractérisée en ce que** des parties de boîtier adjacentes (5) sont reliées au moyen d'un tube respectif (6) pour le passage du câble d'alimentation, en particulier dans laquelle le tube respectif (6) est conduit à sa première zone d'extrémité axiale à travers un évidement dans une première partie de boîtier (5) et à sa deuxième zone d'extrémité axiale à travers un évidement dans une deuxième partie de boîtier (5).
